# EUROPÄISCHE PATENTANMELDUNG

(11) **EP 0 829 338 A1**
(43) Veröffentlichungstag der Anmeldung: **18.03.1998**
(21) Anmeldenummer: 97115816.7
(22) Anmeldetag: 11.09.1997
(51) Int. Cl.: B29C 47/50, B29C 45/54, B29C 47/44

(54) **Verfahren und Vorrichtung zum Dosieren eines plastifizierten Kunststoffs**

(30) Priorität: 16.09.1996 DE 19637761
(71) Anmelder: Kannegiesser KMH Kunststofftechnik GmbH, 32429 Minden (DE)
(72) Erfinder: Kiesau, Wilfried, 31602 Voltho (DE); Heinz, Engelbert, 31602 Vlotho (DE)
(74) Vertreter: Möller, Friedrich, Dipl.-Ing.

(57) **Zusammenfassung**

Plastifizierbares Kunststoffmaterial wird in einem Extruder (11) durchmischt, erwärmt und in einer gewünschten Menge ausgegeben. Die Austragsgeschwindigkeit ist abhängig von der Förderleistung der Plastifizierschnecke (13). Diese ist wegen der erforderlichen Durchmischung des Materials relativ langsam.

Erfindungsgemäß ist vorgesehen, das aus dem Plastifizierzylinder (12) austretende Material zunächst in einem Behälter (22) zu sammeln und aus diesem nach Bedarf auszufördern. Der Austrag aus dem Behälter (22) kann wesentlich schneller erfolgen, als aus dem Extruder, da das Material bereits durchmischt und erwärmt ist. Der Plastifizierzylinder (12) ist gegenüber dem Behälter (22) durch einen Verschlußkopf (33) der axial verschiebbaren Plastifizierschnecke (13) verschließbar.

## Beschreibung

Die Erfindung betrifft ein Verfahren zum Dosieren eines plastifizierten Kunststoffs nach dem Oberbegriff des Anspruchs 1. Weiterhin betrifft die Erfindung eine Vorrichtung zum Dosieren eines plastifizierten Kunststoffes nach dem Oberbegriff des Anspruchs 3 bzw. 6.

Extruder werden unter anderem zum Plastifizieren von Kunststoffen und zum Dosieren einer bestimmten Menge desselben verwendet. Aus dem Extruder tritt die Kunststoffmasse bedingt durch eine Förderung der Plastifizierschnecke relativ langsam aus. Für die Herstellung größerer Kunststoff-Formteile ist demgegenüber eine schnelle Befüllung der Form günstig. Ein höherer Extruderausstoß ist bislang nur über eine Vergrößerung des Querschnitts der Plastifizierschnecke oder eine höhere Plastifizierschneckengeschwindigkeit in Verbindung mit einer höheren Heizleistung erzielbar.

Aufgabe der vorliegenden Erfindung ist es, ein Verfahren und eine Vorrichtung zum Dosieren eines plastifizierten Kunststoffs bereitzustellen, welche mit einfachen Mitteln einen erhöhten Materialausstoß ermöglichen.

Das erfindungsgemäße Verfahren ist dadurch gekennzeichnet, daß das Material aus dem Plastifizierzylinder zunächst in einen Behälter ausgetragen und aus diesem nach Bedarf ausgefördert wird. Der Behälter kann während eines laufenden Preßvorgangs eines Formteils befüllt werden und bildet dadurch eine Art Speicher. Die Ausförderung aus dem Behälter ist dadurch nicht mehr abhängig von der Förderleistung der Plastifizierschnecke.

Vorteilhafterweise wird zunächst der Plastifizierzylinder nach dem Austrag des Kunststoff-Materials gegenüber dem Behälter verschlossen und erst dann das in dem Behälter vorhandene Material ausgefördert. Ein Rückströmen des Materials wird so verhindert.

Die erfindungsgemäße Vorrichtung ist dadurch gekennzeichnet, daß an den Plastifizierzylinder ein Behälter unmittelbar anschließt, in den das aus der Austrittsöffnung austretende plastifizierte Material direkt eintritt und aus dem das Material über eine Öffnung nach Bedarf ausförderbar ist. Auch kann der Austrittsöffnung des Plastifizierzylinders ein Verschlußorgan zugeordnet sein, durch welches der Plastifizierzylinder direkt gegenüber dem Behälter verschließbar ist.

Vorteilhafterweise ist der Behälter als Stauzylinder ausgebildet und weist einen zum Auspressen des plastifizierbaren Materials unter Druck verschiebbaren Kolben auf. Gerade durch diese Maßnahme ist ein wesentlich schnelleres Ausfördern des Materials aus dem Behälter bzw. Stauzylinder gegenüber der Förderleistung des Extruders möglich.

Ein unabhängiger Erfindungsgedanke richtet sich auf die besondere Gestaltung einer axial verschiebbaren Plastifizierschnecke innerhalb des zugehörigen Plastifizierzylinders. Eine MaterialAustrittsöffnung des Plastifizierzylinders ist durch ein Verschlußorgan an einem Ende der axial verfahrbar ausgebildeten Plastifizierschnecke verschließbar. Der Materialaustritt aus dem Extruder kann so in definierter Weise erfolgen, ebenso die Übergabe in einen nachgeordneten Behälter.

Vorzugsweise ist der Verschlußkopf so angeordnet, daß die Austrittsöffnung bei axial vorgefahrener, das heißt in Extrusionsrichtung bewegter Plastifizierschnecke geöffnet und in einer entgegengesetzten Stellung, das heißt bei zurückgefahrener Plastifizierschnecke, durch den Verschlußkopf verschlossen ist.

Weitere Merkmale der Erfindung sind den Unteransprüchen entnehmbar. Ein bevorzugtes Ausführungsbeispiel wird im folgenden anhand von Zeichnungen näher beschrieben. Es zeigen:
- Fig. 1: eine erfindungsgemäße Vorrichtung in einem Längsschnitt und mit einer Plastifizierschnecke in Öffnungsstellung,
- Fig. 2: die Vorrichtung gemäß Fig. 1 mit der Plastifizierschnecke in Schließstellung.

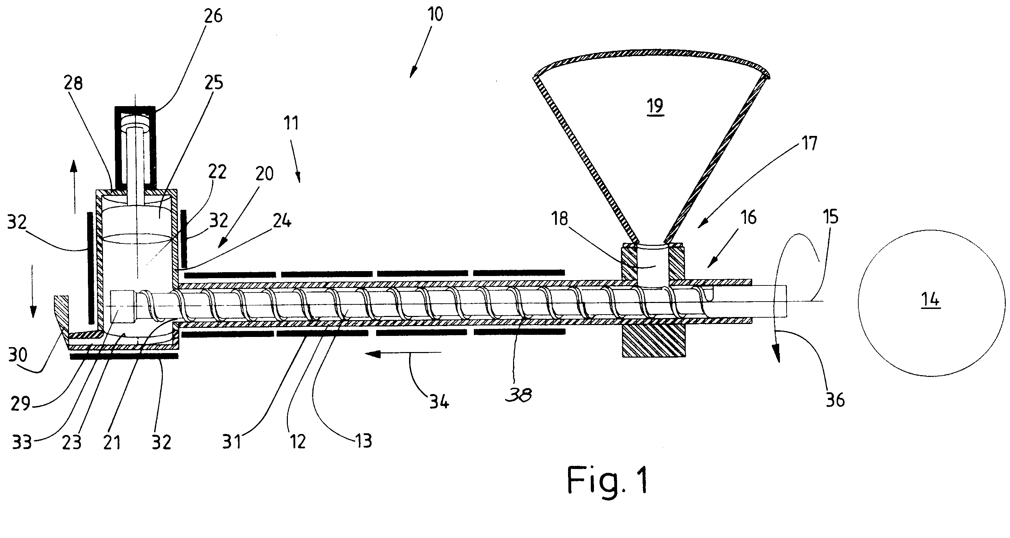

Die Figuren zeigen eine als Dosiereinrichtung 10 ausgebildete Vorrichtung. Die Dosiereinrichtung 10 weist einen Extruder 11 mit einem Plastifizierzylinder 12 und einer hierin axial verschiebbaren Plastifizierschnecke 13 auf. Ein Antrieb für die genannte Axialverschiebung ist nicht dargestellt, gleichwohl vorgesehen. Rechts in der Fig. 1 ist ein Motor 14 zur Erzeugung einer Drehbewegung der Plastifizierschnecke um eine Drehachse 15 gezeigt. Die axiale Verschiebung der Plastifizierschnecke 13 kann beispielsweise erzielt werden durch Betätigung einer entsprechenden Kolben-Zylinder-Einheit, die die Plastifizierschnecke 13 allein oder zusammen mit dem Motor 14 in axialer Richtung beaufschlagt und verschiebt.

An einem Endbereich 16 des Plastifizierzylinders 12 ist ein Materialeinlaß 17 mit einer quer zur Plastifizierschnecke 13 gerichteten Einlaßöffnung 18 und einem vorgeordneten Einlaßtrichter 19 vorgesehen. Ein gegenüberliegendes Ende 20 des Plastifizierzylinders 12 weist eine in axialer Richtung offene, zylindrische Austrittsöffnung 21 auf. Diese mündet in einen zylindrischen und als Stauzylinder wirkenden Behälter 22. Letzterer ist quer zum Plastifizierzylinder 12 angeordnet, derart, daß die Austrittsöffnung 21 nahe einem Behälterboden 23 eine zylindrische Wandung 24 durchbricht. Der Plastifizierzylinder 12 und der Behälter 22 sind also unmittelbar miteinander verbunden, in dem der Behälter 22 vor der Austrittsöffnung 21 des Extruders 11 angeordnet ist.

In dem Behälter 22 ist ein quer zur Plastifizierschnecke 13 verschiebbarer Kolben 25 angeordnet. Eine Antriebseinheit hierfür ist mit 26 bezeichnet. Eine zugehörige Kolbenstange 27 durchstößt einen Behälterdeckel 28 im Bereich der genannten Antriebseinheit 26.

Im Bereich des Behälterbodens 23 ist eine Öffnung 29 vorgesehen. Diese kann als Breitschlitzdüse ausgebildet sein. Als Verschluß derselben dient ein sogenannter Messerverschluß 30. Die Öffnung 29 liegt der Austrittsöffnung 21 am Umfang der Wandung 24 gegenüber, ist aber gegenüber dieser in den Boden 23 integriert. Die Öffnungsrichtung verläuft entsprechend parallel zur Längsrichtung der Drehachse 15 und damit zur Förderrichtung der Plastifizierschnecke 13.

Der Plastifizierzylinder 12 weist außen zwischen dem Materialeinlaß 17 und dem Behälter 22 Heizzonen mit entsprechenden Heizorganen 31 auf. Analog dazu sind im Bereich des Behälters 22 bzw. der Wandung 24 und des Bodens 23 Heizzonen mit Heizorganen 32 vorgesehen.

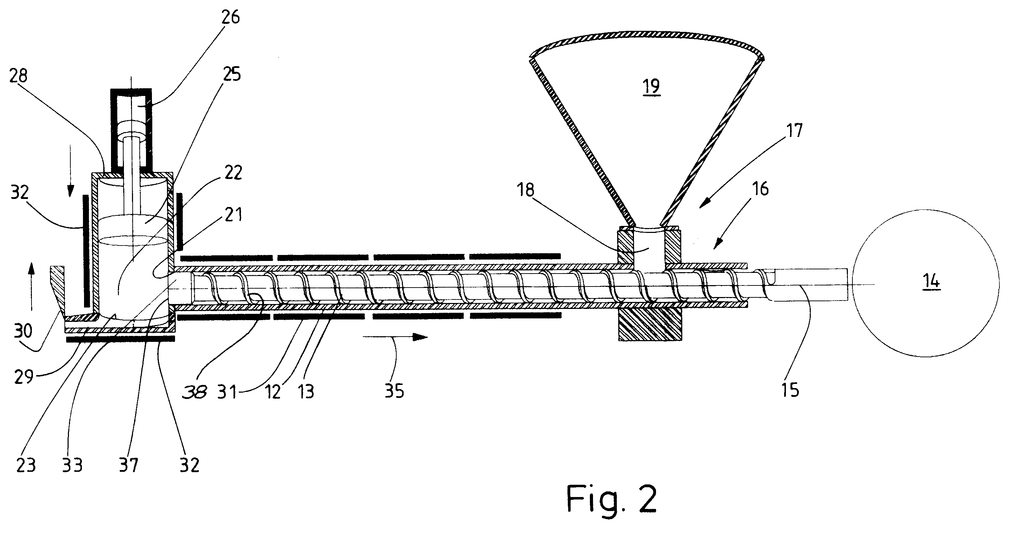

Die Plastifizierschnecke 13 ist an dem dem Behälter 22 zugewandten Ende mit einem zylindrischen Verschlußkopf 33 versehen. Dieser weist einen Außendurchmesser auf, der dem Innendurchmesser der Austrittsöffnung 21 und damit dem Innendurchmesser des Plastifizierzylinders 12 entspricht. Weiterhin entspricht der Außendurchmesser des zylindrischen Verschlußkopfes 33 dem Außendurchmesser der Schneckenwendel 38 der Plastifizierschnecke 13. Durch Verschieben der Plastifizierschnecke 13 gegen deren Förderrichtung ist somit ein Verschließen der Austrittsöffnung 21 durch den Verschlußkopf 33 möglich. Die Förderrichtung ist in Fig. 1 mit dem Pfeil 34 gekennzeichnet, die Gegenrichtung in Fig. 2 mit dem Pfeil 35.

Die erfindungsgemäße Einrichtung arbeitet folgendermaßen:

Es wird ausgegangen von der in Fig. 1 gezeigten Stellung der Plastifizierschnecke 13, des Verschlußkopfes 33, des Kolbens 25 und des Messerverschlusses 30. Dabei ragt ein vorderer Teil der Plastifizierschnecke 13 mit dem gesamten Verschlußkopf 33 und einem darauffolgenden Teilbereich der Plastifizierschnecke 13 mit der Schneckenwendel 38 in den Behälter 22 hinein. In den Trichter 19 wird Kunststoffgranulat eingegeben, das durch Drehung der Plastifizierschnecke 13 in Richtung des Pfeils 36 aus dem Zylinder 12 in den Behälter 22 unmittelbar eingefördert wird. Der Fördervorgang wird solange durchgeführt, bis der Behälter 22 mit plastifiziertem Kunststoff entsprechender Menge Material gefüllt ist. Gegebenenfalls weist der Behälter eine hier nicht gezeigte, verschließbare Entfüftungsöffnung auf. Nach Erreichen eines bestimmten Füllgrades des Behälters 22 werden der Motor 14 gestoppt und die Plastifizierschnecke 13 in axialer Richtung in den Plastifizierzylinder 12 bewegt. Der Verschlußkopf 33 kommt dadurch aus einer Position innerhalb des Behälters 22 (Öffnungsstellung, Fig. 1) in eine Position in der Austrittsöffnung 21 (Schließstellung, Fig. 2). Das heißt, der Verschlußkopf 33 schließt die Austrittsöffnung 21 in Schließstellung mit einer Kopffläche 37 vorzugsweise bündig ab.

Nachfolgend (Fig. 2) wird die im Behälter 22 vorhandene Masse durch Druck des Kolbens 25 aus der Öffnung 29 bzw. der hier vorgesehenen Breitschlitzdüse bei entsprechender Öffnungsstellung des Messerverschlusses 30 ausgefördert. Während der Ausförderung des Materials aus dem Behälter 22 wird der Plastifizierzylinder 12 gegenüber dem Behälter 22 durch einen vorderen Teil der Plastifizierschnecke 13, nämlich dem Verschlußkopf 33, verschlossen. Dieser Ausfördervorgang kann stoßweise erfolgen. Die Ausfördermenge ist wesentlich größer als die Förderleistung der Plastifizierschnecke 13. Das im Behälter 22 befindliche Material ist erwärmt und durchgemischt und muß lediglich ausgefördert werden. Die Plastifizierschnecke 13 muß demgegenüber neben der eigentlichen Förderleistung zugleich eine innige Durchmischung des Materials bewirken; auch wird das Material entlang der Plastifizierschnecke 13 erwärmt. Die Förderleistung der Plastifizierschnecke braucht somit nicht so hoch sein wie der Ausstoß aus dem Behälter 22. Auch ist die Geometrie des Behälters 22 hierauf abgestimmt. Dieser weist nämlich einen Zylinderquerschnitt auf, der deutlich größer ist als der Querschnitt des Plastifizierzylinders 12. Vorzugsweise weisen die verschiedenen Durchmesser ein Verhältnis von 2:1 auf.

### Bezugszeichenliste:

- 10: Dosiereinrichtung
- 11: Extruder
- 12: Plastifizierzylinder
- 13: Plastifizierschnecke
- 14: Motor
- 15: Drehachse
- 16: Endbereich
- 17: Materialeinlaß
- 18: Einlaßöffnung
- 19: Trichter
- 20: Ende
- 21: Austrittsöffnung
- 22: Behälter
- 23: Behälterboden
- 24: Wandung
- 25: Kolben
- 26: Antriebseinheit
- 27: Kolbenstange
- 28: Behälterdeckel
- 29: Öffnung
- 30: Messerverschluß
- 31: Heizorgane
- 32: Heizorgane
- 33: Verschlußkopf
- 34: Pfeil
- 35: Pfeil
- 36: Pfeil
- 37: Kopffläche
- 38: Schneckenwendel

## Patentansprüche

1. Verfahren zum Dosieren eines plastifizierten Kunststoffes, wobei der Kunststoff in einen Plastifizierzylinder (12) eines Extruders (11) eingegeben, entlang des Plastifizierzylinders (12) mittels einer Plastifizierschnecke (13) mindestens plastifiziert und aus dem Plastifizierzylinder (12) ausgetragen wird, **dadurch gekennzeichnet**,
daß das Material aus dem Plastifizierzylinder (12) zunächst in einen Behälter (22) ausgetragen und aus diesem nach Bedarf ausgefördert wird, wobei zumindest während des Ausförderns des Materials aus dem Behälter (22) der Plastifizierzylinder (12) gegenüber dem Behälter (22) durch einen Teil der Plastifizierschnecke (13) verschlossen wird.

2. Verfahren nach Anspruch 1, dadurch gekennzeichnet, daß der Behälter (22) gegenüber dem Plastifizierzylinder (12) verschlossen wird durch eine Axialverschiebung der Plastifizerschnecke (13) im Plastifizierzylinder (12).

3. Vorrichtung zum Dosieren eines plastifizierten Kunststoffes, mit einer in einem Plastifizierzylinder (12) angeordneten Plastifizierschnecke (13) und einer Material-Austrittsöffnung (21) an einem anderen Endbereich des Plastifizierzylinders (12), dadurch gekennzeichnet, daß an den Plastifizierzylinder (12) ein Behälter (22) unmittelbar anschließt, in den das aus der Austrittsöffnung (21) austretende plastifizierte Material eintritt und aus dem das plastifizierte Material über eine Öffnung (29) nach Bedarf ausförderbar ist.

4. Vorrichtung nach Anspruch 3, dadurch gekennzeichnet, daß der Austrittsöffnung (21) des Plastifizierzylinders (12) ein Verschlußorgan (Verschlußkopf 33) zugeordnet ist, durch welches der Plastifizierzylinder (12) gegenüber dem Behälter (22) verschließbar ist.

5. Vorrichtung nach Anspruch 3 oder 4, dadurch gekennzeichnet, daß die Austrittsöffnung (21) des Plastifizierzylinders (12) eine insbesondere zylindrische Öffnung in einer Zylinderwandung (24) des Behälters (22) ist.

6. Vorrichtung zum Dosieren eines plastifizierten Kunststoffes, mit einem Plastifizierzylinder (12), einer darin angeordneten Plastifizierschnecke (13) und einer Material-Austrittsöffnung (21) an einem Endbereich des Plastifizierzylinders (12), gekennzeichnet durch ein Verschlußorgan an einem Ende der Plastifizierschnecke (13) und eine axial verschiebbare Anordnung der Plastifizierschnecke (13) im Plastifizierzylinder (12) zum Verschließen der Austrittsöffnung (21) durch die Plastifizierschnecke (13).

7. Vorrichtung nach einem der vorhergehenden Ansprüche, dadurch gekennzeichnet, daß die Austrittsöffnung (21) bei axial vorgefahrener, das heißt in Förderrichtung des Materials bewegter Plastifizierschnecke (13) geöffnet und in einer entgegengesetzten Stellung, das heißt bei zurückgefahrener Plastifizierschnecke (13), durch das Verschlußorgan, insbesondere durch einen Verschlußkopf (33) verschlossen ist.

8. Vorrichtung nach Anspruch 6 oder 7, dadurch gekennzeichnet, daß der Plastifizierzylinder (12) zum Austritt des Materials an einem Ende in axialer Richtung unter Bildung der Austrittsöffnung (21) offen ist, daß der vorzugsweise zylindrische Verschlußkopf (33) einen hierzu (zur Austrittsöffnung) korrespondierenden Querschnitt aufweist und durch axiale Verschiebung insbesondere entgegen die Förderrichtung der Plastifizierschnecke (13) in die Austrittsöffnung (21) unter Abdichtung derselben einschiebbar ist.

9. Vorrichtung nach Anspruch 8, dadurch gekennzeichnet, daß die Austrittsöffnung (21) und der Verschlußkopf (33) dem Innendurchmesser des Plastifizierzylinders (12) entsprechende wirksame Durchmesser aufweisen.

10. Vorrichtung nach einem der vorhergehenden Ansprüche, dadurch gekennzeichnet, daß an den Plastifizierzylinder (12) ein Behälter (22) anschließt, in den das aus der Austrittsöffnung (21) austretende plastifizierte Material eintritt und aus dem das Material bei geschlossener Austrittsöffnung (21) über eine entsprechende Öffnung (29) austragbar ist.

11. Vorrichtung nach einem der vorhergehenden Ansprüche, dadurch gekennzeichnet, daß die Austrittsöffnung (21) des Plastifizierzylinders (12) eine insbesondere zylindrische Öffnung (29) in einer Zylinderwandung (24) des Behälters (22) ist.

12. Vorrichtung nach einem der vorhergehenden Ansprüche, dadurch gekennzeichnet, daß der Verschlußkopf (33) in Öffnungsstellung und offener Austrittsöffnung (21) in das Innere des Behälters (22) hineinragt.
